# EUROPEAN PATENT SPECIFICATION

(11) **EP 1 491 040 B1**
(45) Date of publication and mention of the grant of the patent: **13.12.2006**
(21) Application number: 03701653.2
(22) Date of filing: 05.02.2003
(51) Int. Cl.: H04N 5/74, H04N 9/31

(54) **PROJECTION DEVICE HAVING A MODE SELECTION UNIT**
PROJEKTIONSEINRICHTUNG MIT EINER EINHEIT ZUR AUSWAHL DER BETRIEBSART
DISPOSITIF DE PROJECTION DOTE D'UNE UNITE DE SELECTION DE MODE

(30) Priority: 14.03.2002 EP 02076034
(43) Date of publication of application: 29.12.2004
(73) Proprietor: Koninklijke Philips Electronics N.V., 5621 BA Eindhoven (NL)
(72) Inventor: DE VAAN, Adrianus, J., S., M., NL-5656 AA Eindhoven (NL)
(74) Representative: van der Veer, Johannis Leendert
(86) International application number: PCT/IB2003/000383
(87) International publication number: WO 2003/077544

(56) References cited:
- PATENT ABSTRACTS OF JAPAN vol. 2000, no. 26, 1 July 2002 (2002-07-01) & JP 2001 264728 A (SONY CORP), 26 September 2001 (2001-09-26)
- PATENT ABSTRACTS OF JAPAN vol. 1995, no. 06, 31 July 1995 (1995-07-31) & JP 07 084553 A (TOSHIBA CORP), 31 March 1995 (1995-03-31)
- PATENT ABSTRACTS OF JAPAN vol. 018, no. 146 (P-1707), 10 March 1994 (1994-03-10) & JP 05 323263 A (SEIKO EPSON CORP), 7 December 1993 (1993-12-07)

## Description

The invention relates to a projection device for projecting an image comprising a light source, electro-optical light modulation means and image projection means for projecting the image. The invention also relates to a corresponding method of projecting an image.

Projection devices, in particular LCD projection devices, are becoming more and more popular for business presentations, particularly for presenting graphic and/or PC data. However, due to the high price, the market of these projection devices for home video applications is still moderate. JP 07 084 553 A therefore proposes a projection liquid crystal display device which is capable of obtaining excellent contrast or luminance in accordance with each picture display and of obtaining an excellent display picture quality, even in the case of displaying a video or a PC picture. In this device, the diameter of an aperture which is located in the imaging path in front of a projection lens is controlled by a mode selection circuit. When displaying video data, the diameter of the aperture is reduced, which improves the contrast, whereas the brightness is enhanced when displaying a PC picture in which the diameter of the aperture is enlarged.

In JP 2001-264728 A it is proposed to provide a projecting device with a light shutter for shielding light in the order of the lower contrast in accordance with the contrast visual field angle characteristics of a liquid crystal panel in order to improve the gradation representation of a low luminance part without complicating the constitution of a light source, and also to suppress the reduction in contrast due to black-floating, in a liquid crystal projector device. The light shutter is arranged nearly to the pupil position of an illumination optical system, and the device is provided with a control means for detecting the peak level of a video signal Vᵢₙ supplied from the outside at prescribed intervals and shielding the light by using the light shutter in the case the peak level is below the prescribed reference level, and also, increasing the level of the video signal Vᵢₙ to drive the liquid crystal panel.

It is an object of the present invention to provide an alternative solution for a projection device which can be used and is optimised for at least two different modes and which avoids the need of controlling an aperture in the imaging path.

According to the present invention, this object is achieved by a projection device as defined in claim 1 which, in addition to the light source, the electro-optical light modulation means and the image projection means, further comprises a switchable module comprising at least a first submodule, and a mode selection unit for controlling said module such that said first submodule is either active or not active in the light path from said light source to said image projection means, said first submodule being adapted to improve the centre brightness and white point of the light.

In contrast to the known solution, the switchable module is not located in the imaging path within the image projection means or between the image projection means and a screen, but is located in the light path so that the light will already be influenced and optimised before it reaches the image projection means. In this way, a much better optimisation depending on the type of data (Video, PC) to be converted into an image for projection can be achieved. The first submodule provided according to the present invention is optimised for video applications which require a proper white point to obtain true colours, e.g. correct skin tones. Furthermore, the perceived picture quality for video applications is improved when there is more light in the centre of the screen with respect to the corners. If, instead of video data, graphic or PC data must be projected, the first submodule can simply be made inactive by the mode selection unit, e.g. by moving the first submodule out of the light beam. The present invention thus provides an inexpensive, yet very effective solution of a projection device which is usable and optimised for different kinds of applications.

As for contrast, a light distribution across the image provided by the solution known from JP 07084553 A is not optimised for these two different applications. In the projection device known from this document, only the contrast of the projected image can be improved by preventing light rays, which traverse the LCD panels at angles where the contrast is weak, from hitting the screen. This is achieved by reducing the size of a diaphragm, but this causes a loss of light, leading to a lower brightness.

In contrast, the present solution does not focus on contrast optimisation, but on light distribution across the image. In the case of data projection, a very homogeneous light distribution is required, i.e. the corner brightness needs to be almost similar to the centre brightness. For these images, the white colour is of lesser importance. The best picture performance is thus provided with this kind of application, i.e. a homogeneous illumination with a good colour brightness and minimum loss of light for colour generation.

In the case of video projection, a different light distribution is preferred. For these applications, the human eye likes the pictures more when the centre brightness is peaked. According to the present invention, this is achieved by another integrator module that distributes the light across the image in another manner. Compared to the data mode, light is now taken away from the corner and brought to the centre. For video, the human eye is very sensitive to proper colours (especially skin colours). This is achieved in this mode with an extra filter element that balances the colour channels and thus the white point.

Compared to the solution known from JP 07084553 A, the present solution has the advantage that the best brightness is achieved in both cases. Colour balancing has a further advantage. If the colour balancing is achieved by modifying the voltages applied to the LCD panels, this balancing will influence the contrast in the image. LCD projection systems have a limited contrast due to light-leakage of the panels, and this light-leakage remains identical when the voltages applied to the panels are modified for proper colour balancing, e.g. if the green channel needs to be dimmed by 40%, this will also involve a 40% lower contrast in the projected image (maximum brightness becomes 40% less, and dark state remains identical). In the case of the colour filter, both the bright state and the dark state are dimmed and the contrast is not changed.

Preferred embodiments of the invention are defined in the dependent claims. According to a first embodiment, the module is located between the light source and the light modulation means.

According to another preferred embodiment, the first submodule comprises an integrator module or a lens unit, particularly comprising two lenses for improving centre brightness and providing a better video performance.

It is further preferred that the first submodule comprises colour balancing filter means for balancing the light spectrum towards the required colour coordinates, particularly for video applications for adjusting a proper white point.

Instead of simply making the first submodule inactive when no video application is required, the module further comprises a second submodule according to another preferred embodiment of the invention, which second submodule is adapted to improve corner brightness and intensity of the light output. The mode selection unit is then adapted to control the module in such a way that either the first or the second submodule is active in the light path. The second submodule is thus optimised for business applications, i.e. for projection of graphic or PC data. This application requires a very homogeneous brightness of the entire image (high corner brightness) and a maximum light output, while a proper colour balancing is not required.

It is advantageous that the mode selection unit is adapted to automatically control the module based on the type of data to be converted into an image for projection. In this way, the module switches automatically in the correct mode, depending on the type of input data. It is thus preferred that the first submodule is active for video data, whereas the second submodule is active for graphic and/or PC data because the submodules are optimised for the corresponding applications.

Alternatively or in addition, a user interface can be provided for controlling the mode selection unit by a user who will then be able to select the correct mode.

The invention can be generally applied in any kind of projection device. A preferred application is in LCD projection devices where the electro-optical light modulation means comprise a three-panel liquid crystal display as particularly described in WO 01/19092.

The invention will now be explained in more detail with reference to the drawings, in which
Fig. 1 shows a first embodiment of a projection device according to the invention, and
Fig. 2 shows a second embodiment of a projection device according to the present invention.

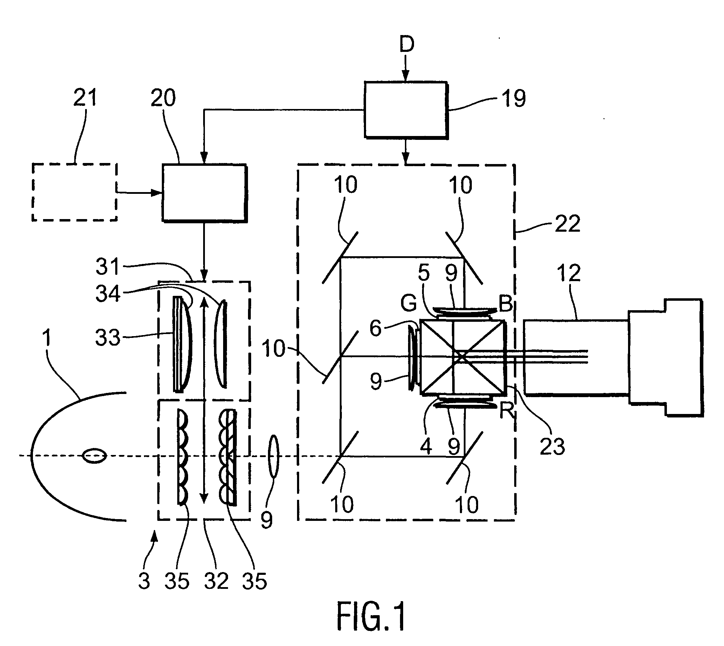

The projection device according to the invention shown in Fig. 1 comprises a light source 1, i.e. a projection lamp, such as an ultra-high pressure (UHP) lamp, having a curved reflector, electro-optical light modulation means 22 and a projection lens 12. The electro-optical light modulation means 22 comprise three electro-optical light modulation panels 4, 5, 6 with which a green (G), a red (R) and a blue (B) part, respectively, of an image to be projected are realized. Furthermore, lenses 9 and (dichroic) folding mirrors 10 are provided in said light modulation means 22 which are known per se and will therefore not be described in greater detail. Moreover, the light modulation means comprise a dichroic prism 23 arranged between the light modulation panels 4, 5, 6 and the projection lens 12. For more details of such a projection device, reference is made to WO 01/19092.

For driving the light modulation means 22, a projection drive unit 19 for supplying it with the information about the images to be projected is provided. The data D, such as video, graphic or PC data, are therefore applied to the projection drive unit 19.

According to the present invention, a switchable module 3 comprising a first submodule 31 and a second submodule 32 is provided in the light path between the light source 1 and the light modulation means M. Depending on the type of application, either one of said submodules 31, 32 is active in the light path while the other one is inactive. Said activity is controlled by a mode selection unit 20 which is connected to the projection drive unit 19 from which it receives information about the kind of data D and/or the kind of application so that the correct submodule 31 or 32 can be activated. In addition or alternatively, a user interface 21 can be provided to allow a user to switch between the first or the second submodule 31 or 32 via the mode selection unit 20.

The first submodule 31 comprises two (in general, one or more) lenses 34 and a spectral filter 33 for white balancing. It is optimised for video applications which generally require a proper white point to obtain true colours. Since the projection lamp 21 is usually deficient in blue and red light, the white point of the light emitted by the projection lamp is visibly shifted to green. To correct this in the case of video applications, the first submodule comprises the filter element 33 that balances the light spectrum towards the proper colour coordinates and adjusts the correct white point. Furthermore, it comprises the lenses 34 for improving the perceived picture quality by focussing more light on the centre of the display with respect to the corners, i.e. the corner brightness is reduced as compared with other applications.

The second submodule 32 comprises two lens plates 35 each carrying a number of lens elements. It is optimised for business applications, such as the projection of graphic or PC data. In such applications, a high corner brightness and a maximum light output are required. To maximize the brightness, no light is "wasted" for proper colour balancing.

Further elements like additional lenses, integrators and/or a polarizing beam splitter may also be provided but are not shown.

Either one of said submodules 31, 32 can be activated by the mode selection unit 20, e.g. by moving one of said submodules into the light path and moving the other submodule out of the light path.

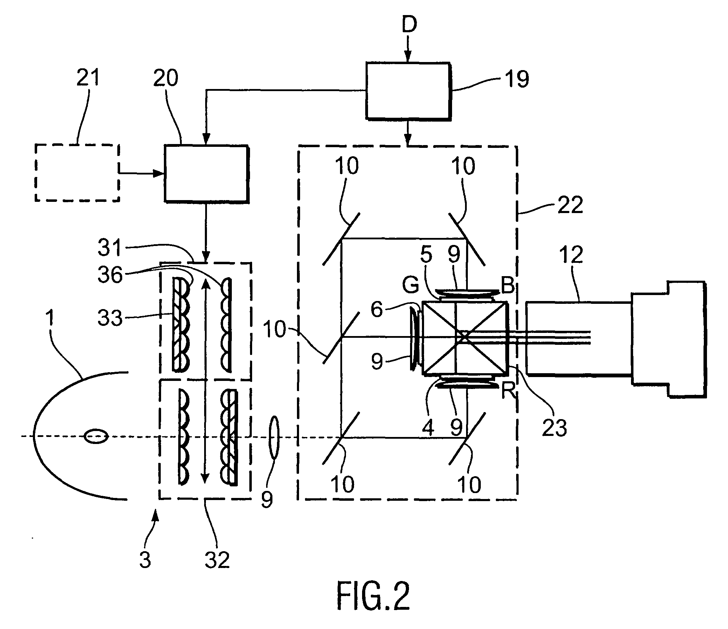

In the embodiment shown in Fig. 2, the submodule 31 does not comprise the two lenses 34 but video integrator modules 36 comprising a lens plate carrying several lenses.

It should be noted that, according to alternative embodiments of the invention, the module 3 may only comprise the first submodule 31 which is activated for video applications, while for other applications the first submodule 31 is simply moved out of the light beam so that the light beam is not influenced at this point. According to still another embodiment, the module 3 may also be located at another position within the projection device. The invention may generally also be applied in other projection devices, particularly comprising different light modulation means.

## Claims

1. A projection device for projecting an image, comprising:
- a light source (1),
- electro-optical light modulation means (22),
- image projection means (12) for projecting the image,
- a switchable module (3) comprising at least a first submodule (31), and
- a mode selection unit (20) for controlling said module (3) such that said first submodule (31) is active in the light path from said light source (1) to said image projection means (12) or not,
**characterized in that** said first submodule (31) is adapted for enhancing the brightness of the centre of the projected image in regard of a corner of the projected image and for balancing the white point of the projected image.

2. A projection device as claimed in claim 1,
wherein said module (3) is located between said light source (1) and said light modulation means (22).

3. A projection device as claimed in claim 1,
wherein said first submodule (31) comprises an integrator module or a lens unit, particularly comprising two lenses.

4. A projection device as claimed in claim 1,
wherein said first submodule (31) comprises colour balancing filter means for balancing the light spectrum towards the required colour coordinates.

5. A projection device as claimed in claim 1,
wherein said module (3) further comprises a second submodule (32) adapted for enhancing the comer-brightness of the projected image and the intensity of light output, and
wherein said mode selection unit (20) is adapted for controlling said module (3) in such a way that either said first or said second submodule (31, 32) is active in the light path.

6. A projection device as claimed in claim 1,
wherein said mode selection unit (20) is adapted to automatically control said module (3) based on the type of data (D) to be converted into an image for projection.

7. A projection device as claimed in claim 6,
wherein said mode selection unit (20) is adapted in such a way that said first submodule (31) is active for video data and that said second submodule (32) is active for graphic and/or PC data.

8. A projection device as claimed in claim 1,
further comprising a user interface (21) for controlling said mode selection unit (20) by a user.

9. A projection device as claimed in claim 1,
wherein said electro-optical light modulation means (22) comprise a three-panel liquid crystal display.

10. A method of projecting an image, comprising the steps of:
- generating light by a light source (1),
- controlling activity of a first submodule (31) in the light path by a mode selection unit (20),
- modulating the light by an electro-optical light modulation means (22),
- projecting the image by an image projection means (12),
**characterized by** a further step of:
- adapting said light by said first submodule (31) for enhancing the brightness of the centre of the projected image in regard of a corner of the projected image and balancing the white point of the projected image.

## Patentansprüche

1. Projektionseinrichtung zum Projizieren eines Bildes, die Folgendes umfasst:
- eine Lichtquelle (1),
- elektrooptische Lichtmodulationsmittel (22),
- Bildprojektionsmittel (12) zum Projizieren des Bildes,
- ein schaltbares Modul (3) mit mindestens einem ersten Untermodul (31) und
- eine Einheit zur Betriebsartauswahl (20) zum Steuern des Moduls (3) in der Weise, dass das erste Untermodul (31) im Strahlengang zwischen der Lichtquelle (1) und den Bildprojektionsmitteln (12) aktiv ist oder nicht, **dadurch gekennzeichnet, dass** das erste Untermodul (31) ausgebildet ist, die Helligkeit der Mitte des projizierten Bildes im Verhältnis zu einer Ecke des projizierten Bildes zu erhöhen und den Weißpunkt des projizierten Bildes abzugleichen.

2. Projektionseinrichtung nach Anspruch 1, bei der sich das Modul (3) zwischen der Lichtquelle (1) und den Lichtmodulationsmitteln (22) befindet.

3. Projektionseinrichtung nach Anspruch 1, bei der das erste Untermodul (31) ein Integratormodul oder eine Linseneinheit umfasst, die insbesondere zwei Linsen umfasst.

4. Projektionseinrichtung nach Anspruch 1, bei der das erste Untermodul (31) Farbabgleich-Filtermittel zum Abgleichen des Lichtspektrums in Richtung der erforderlichen Farbkoordinaten umfasst.

5. Projektionseinrichtung nach Anspruch 1, bei der das Modul (3) des Weiteren ein zweites Untermodul (32) umfasst, das ausgebildet ist, die Helligkeit in den Ecken des projizierten Bildes und die Intensität der Lichtausgabe zu erhöhen, wobei die Einheit zur Betriebsartauswahl (20) ausgebildet ist, das Modul (3) in der Weise zu steuern, dass entweder das erste oder das zweite Untermodul (31, 32) im Strahlengang aktiv ist.

6. Projektionseinrichtung nach Anspruch 1, bei der die Einheit zur Betriebsartauswahl (20) ausgebildet ist, das Modul (3) basierend auf der Art von Daten (D), die für die Projektion in ein Bild umgewandelt werden sollen, automatisch zu steuern.

7. Projektionseinrichtung nach Anspruch 6, bei der die Einheit zur Betriebsartauswahl (20) so ausgebildet ist, dass das erste Untermodul (31) bei Videodaten aktiv ist und das zweite Untermodul (32) bei grafischen Daten und/oder PC-Daten aktiv ist.

8. Projektionseinrichtung nach Anspruch 1, die des Weiteren eine Benutzerschnittstelle (21) zum Steuern der Einheit zur Betriebsartauswahl (20) durch einen Benutzer umfasst.

9. Projektionseinrichtung nach Anspruch 1, bei der die elektrooptischen Lichtmodulationsmittel (22) eine Flüssigkristallanzeige mit drei Panels umfassen.

10. Verfahren zum Projizieren eines Bildes, das die folgenden Schritte umfasst:
- Erzeugen von Licht mittels einer Lichtquelle (1),
- Steuern der Aktivität eines ersten Untermoduls (31) im Strahlengang mittels einer Einheit zur Betriebsartauswahl (20),
- Modulieren des Lichts mittels elektrooptischer Lichtmodulationsmittel (22),
- Projizieren des Bildes mit Hilfe von Bildprojektionsmitteln (12),
**gekennzeichnet durch** einen weiteren Schritt des:
- Anpassens des Lichtes mittels des ersten Untermoduls (31), um die Helligkeit der Mitte des projizierten Bildes im Verhältnis zu einer Ecke des projizierten Bildes zu erhöhen und den Weißpunkt des projizierten Bildes abzugleichen.

## Revendications

1. Dispositif de projection pour projeter une image, comprenant:
- une source de lumière (1),
- des moyens électro-optiques de modulation de lumière (22),
- des moyens de projection d'image (12) pour projeter l'image,
- un module commutable (3) comprenant au moins un premier sous-module (31), et
- une unité de sélection de mode (20) pour commander ledit module (3) de telle façon que ledit premier sous-module (31) soit actif dans le trajet de lumière s'étendant à partir de ladite source de lumière (1) vers lesdits moyens de projection d'image (12) ou pas,
**caractérisé en ce que** ledit premier sous-module (31) est adapté de manière à augmenter l'éclat de centre de l'image projetée en rapport avec un coin de l'image projetée et de manière à équilibrer le blanc de référence de l'image projetée.

2. Dispositif de projection selon la revendication 1,
dans lequel ledit module (3) se situe entre ladite source de lumière (1) et lesdits moyens de modulation de lumière (22).

3. Dispositif de projection selon la revendication 1,
dans lequel ledit premier sous-module (31) comprend un intégrateur modulaire ou une unité de lentille comprenant particulièrement deux lentilles.

4. Dispositif de projection selon la revendication 1,
dans lequel le premier sous-module (31) comprend des moyens filtrants d'équilibrage de couleur pour équilibrer le spectre lumineux vers les coordonnées de couleur requises.

5. Dispositif de projection selon la revendication 1,
dans lequel ledit module (3) comprend encore un second sous-module (32) qui est adapté de manière à augmenter l'éclat de coin de l'image projetée et l'intensité du flux lumineux, et
dans lequel ladite unité de sélection de mode (20) est adaptée de manière à commander ledit module (3) de telle façon que ledit premier ou ledit second sous-module (31, 32) soit actif dans le trajet de lumière.

6. Dispositif de projection selon la revendication 1,
dans lequel ladite unité de sélection de mode (20) est adaptée de manière à commander automatiquement ledit module (3) sur base du type de données (D) à convertir en une image en vue de projection.

7. Dispositif de projection selon la revendication 6,
dans lequel ladite unité de sélection de mode (20) est adaptée de telle façon que ledit premier sous-module (31) soit actif pour des données vidéo et que le second sous-module (32) soit actif pour des données graphiques et/ou pour des données de PC.

8. Dispositif de projection selon la revendication 1,
comprenant encore une interface utilisateur (21) pour commander ladite unité de sélection de mode (20) par le biais d'un utilisateur.

9. Dispositif de projection selon la revendication 1,
dans lequel lesdits moyens électro-optiques de modulation de lumière (22) comprennent un dispositif d'affichage à cristaux liquides à trois panneaux.

10. Procédé de projection d'une image, comprenant les étapes consistant à:
- générer de la lumière au moyen d'une source de lumière (1),
- commander l'activité d'un premier sous-module (31) dans le trajet de lumière au moyen d'une unité de sélection de mode (20),
- moduler la lumière à l'aide de moyens électro-optiques de modulation de lumière (22),
- projeter l'image à l'aide de moyens de projection d'image (12),
**caractérisé par** une nouvelle autre étape consistant à:
- adapter ladite lumière au moyen dudit premier sous-module (31) pour augmenter l'éclat de centre de l'image projetée en rapport avec un coin de l'image projetée et à équilibrer le blanc de référence de l'image projetée.
